# EUROPEAN PATENT APPLICATION

(11) **EP 3 599 489 A1**
(43) Date of publication of application: **29.01.2020**
(21) Application number: 19186011.3
(22) Date of filing: 12.07.2019
(51) Int. Cl.: G02B 5/10, G02B 5/30, G02B 27/28, G02B 27/09, G03B 21/00, G03B 21/20, H04N 9/31

(54) **PROJECTION DEVICE**

(30) Priority: 27.07.2018 CN 201810840448
(71) Applicant: Coretronic Corporation, Hsin-Chu 300 (TW)
(72) Inventor: WEI, CHUNG-TING, 300 Hsin-Chu (TW); CHENG, CHUAN-TE, 300 Hsin-Chu (TW)
(74) Representative: Ter Meer Steinmeister & Partner

(57) **Abstract**

A projection device is provided, and the projection device includes an illumination system, a polarizing beam splitter, a reflection element, a 1/4 wave plate, a reflective light valve disposed on the transmission path of the illumination beam and a projection lens disposed on a transmission path of the image beam, wherein the polarizing beam splitter, the reflection element and the 1/4 wave plate are all disposed on a transmission path of the illumination beam. The illumination system emits an illumination beam. The illumination beam is transmitted to the 1/4 wave plate and the reflection element after being reflected by the polarizing beam splitter, the illumination beam having a first polarization direction is modulated by the 1/4 wave plate to have a second polarization direction. The reflective light valve modulates the illumination beam having the second polarization direction into an image beam having the first polarization direction.

## Description

This application claims the priority of China application serial no. 201810840448.2, filed on July 27, 2018.

### BACKGROUND OF THE INVENTION

### Field of the Invention

The invention relates to a projection device, and particularly relates to a projection device with a reflective light valve, which is adapted to be applied to different display devices.

### Description of Related Art

Generally, a known projection device has components such as an illumination system, a polarizing beam splitter, a reflective light valve and a projection lens, etc. To be specific, when image projection is performed, the illumination system may emit an illumination beam to the polarizing beam splitter, and the polarizing beam splitter is configured to reflect the illumination beam with a certain polarization direction to the reflective light valve. The reflective light valve then converts the illumination beam into an image beam and reflects the image beam to the projection lens. Then, the projection lens projects the image beam onto a screen to produce an image.

However, in the optical path design of the above projection device, regardless of whether a normal vector of an active surface of the reflective light valve is configured to be parallel with or perpendicular to an optical axis of the projection lens, the projection device is limited by the optical path design that the optical axis of the projection lens must be perpendicular to the optical axis of the illumination system. In this way, when the known projection device is embedded in electronic products with a projection requirement (such as smart phones, notebooks, cameras, video cameras, portable camera and virtual reality glasses device, etc.) to implement related functions, it may cause difficulties in a design layout of the internal components of the products, and it is unable to meet the needs of a growing variety of the electronic products.

The information disclosed in this Background section is only for enhancement of understanding of the background of the described technology and therefore it may contain information that does not form the prior art that is already known to a person of ordinary skill in the art. Further, the information disclosed in the Background section does not mean that one or more problems to be resolved by one or more embodiments of the invention were acknowledged by a person of ordinary skill in the art.

### SUMMARY OF THE INVENTION

The invention is directed to a projection device, which has an in-line optical path design, and is not limited by an internal space of a display device, and is adapted to reduce a volume of the display device.

Other objects and advantages of the invention may be further illustrated by the technical features broadly embodied and described as follows.

The object is solved by the features of the independent claims. Preferred embodiments area given in the dependent claims.

In order to achieve one or a portion of or all of the objects or other objects, an embodiment of the invention provides a projection device. The projection device includes an illumination system, a polarizing beam splitter, a reflection element, a 1/4 wave plate, a reflective light valve and a projection lens. The illumination system is configured to emit an illumination beam. The polarizing beam splitter is disposed on a transmission path of the illumination beam, and is configured to reflect the illumination beam having a first polarization direction. The reflection element is disposed on the transmission path of the illumination beam, wherein the polarizing beam splitter is located between the illumination system and the reflection element. The 1/4 wave plate is disposed on the transmission path of the illumination beam, and is located between the reflection element and the polarizing beam splitter, wherein the illumination beam is reflected by the polarizing beam splitter and transmitted to the 1/4 wave plate and the reflection element, and the illumination beam having the first polarization direction is modulated by the 1/4 wave plate to have a second polarization direction. The reflective light valve is disposed on the transmission path of the illumination beam having the second polarization direction, wherein the reflective light valve is configured to modulate the illumination beam having the second polarization direction into an image beam having the first polarization direction. The projection lens is disposed on a transmission path of the image beam.

Preferably, an optical axis of the illumination beam incident to the polarizing beam splitter may be parallel with an optical axis of the projection lens.

Preferably, the projection device may further comprise a lens array, disposed on the transmission path of the illumination beam, and may be located between the illumination system and the reflective light valve.

Preferably, the projection device may further comprise a first polarizer, disposed on the transmission path of the illumination beam, and may be located between the illumination system and the reflective light valve.

Preferably, the projection device may further comprise a first lens, disposed on the transmission path of the illumination beam, and may be located between the lens array and the first polarizer.

Preferably, the first lens and the first polarizer may be adhered on the polarizing beam splitter through an adhesion layer.

Preferably, the first lens and the first polarizer may be separated from the polarizing beam splitter.

Preferably, the projection device may further comprise a second polarizer, disposed on the transmission path of the image beam, and may be located between the polarizing beam splitter and the projection lens.

Preferably, the reflection element may have a reflective curved surface.

Preferably, the reflective curved surface may face the 1/4 wave plate.

Preferably, the reflection element may comprise a second lens.

Preferably, the 1/4 wave plate may be located between the second lens and the polarizing beam splitter.

Preferably, the reflective curved surface may be formed on a surface of the second lens away from the 1/4 wave plate.

Preferably, the reflection element may be a reflection mirror.

Preferably, the reflective curved surface of the reflection element may be a spherical surface, an aspherical surface, or an optical diffraction surface.

Preferably, the reflection element and the 1/4 wave plate may be separated from the polarizing beam splitter.

Preferably, an optical axis of the image beam reflected by the polarizing beam splitter may be parallel with an optical axis of the projection lens.

Preferably, an optical axis of the illumination beam incident to the polarizing beam splitter may be coincided with an optical axis of the projection lens.

Preferably, a half field of view angle of the image beam incident to the polarizing beam splitter may be smaller than 15 degrees.

Preferably, the illumination system comprises at least one: at least one light source, providing at least one light beam; and a lens group, disposed on a transmission path of the at least one light beam.

Preferably, the at least one light beam passes through the lens group to form the illumination beam.

Preferably, the number of the at least one light source may be plural, so as to provide a plurality of light beams.

Preferably, the illumination system may further comprise a light combining unit, disposed on a transmission path of the light beams, and configured to combine the light beams into the illumination beam.

Preferably, the light combining unit may comprise an X prism disposed on the transmission path of the light beams.

Preferably, the light combining unit may comprise at least one dichroic mirror, and the at least one dichroic mirror is disposed corresponding to the transmission paths of the light beams.

Based on the above description, the embodiments of the invention have at least one of the following advantages and effects. In the embodiments of the invention, the projection device is adapted to modulate a polarization direction of the illumination beam incident to the reflective light valve through the configuration of the 1/4 wave plate and the reflection element, so that an optical axis of the projection lens may be disposed in a direction parallel with the illumination beam incident to the polarizing beam splitter. In this way, in the embodiments of the invention, the projection device may have an in-line optical path design, so as to be widely applied to increasingly diversified electronic products.

Other objectives, features and advantages of the present invention will be further understood from the further technological features disclosed by the embodiments of the present invention wherein there are shown and described preferred embodiments of this invention, simply by way of illustration of modes best suited to carry out the invention.

### BRIEF DESCRIPTION OF THE DRAWINGS

The accompanying drawings are included to provide a further understanding of the invention, and are incorporated in and constitute a part of this specification. The drawings illustrate embodiments of the invention and, together with the description, serve to explain the principles of the invention.
FIG. 1A is a structural schematic diagram of a projection device according to an embodiment of the invention.
FIG. 1B is an optical path schematic diagram of light beams of the projection device of FIG. 1A.
FIG. 1C is a schematic diagram of a field of view (FOV) angle of an image beam of the projection device of FIG. 1A.
FIG. 2A is a structural schematic diagram of another illumination system of the projection device of FIG. 1A.
FIG. 2B is a structural schematic diagram of another illumination system of the projection device of FIG. 1A.
FIG. 2C is a structural schematic diagram of another illumination system of the projection device of FIG. 1A.

### DESCRIPTION OF EMBODIMENTS

In the following detailed description of the preferred embodiments, reference is made to the accompanying drawings which form a part hereof, and in which are shown by way of illustration specific embodiments in which the invention may be practiced. In this regard, directional terminology, such as "top," "bottom," "front," "back," etc., is used with reference to the orientation of the Figure(s) being described. The components of the present invention can be positioned in a number of different orientations. As such, the directional terminology is used for purposes of illustration and is in no way limiting. On the other hand, the drawings are only schematic and the sizes of components may be exaggerated for clarity. It is to be understood that other embodiments may be utilized and structural changes may be made without departing from the scope of the present invention. Also, it is to be understood that the phraseology and terminology used herein are for the purpose of description and should not be regarded as limiting. The use of "including," "comprising," or "having" and variations thereof herein is meant to encompass the items listed thereafter and equivalents thereof as well as additional items. Unless limited otherwise, the terms "connected," "coupled," and "mounted" and variations thereof herein are used broadly and encompass direct and indirect connections, couplings, and mountings. Similarly, the terms "facing," "faces" and variations thereof herein are used broadly and encompass direct and indirect facing, and "adjacent to" and variations thereof herein are used broadly and encompass directly and indirectly "adjacent to". Therefore, the description of "A" component facing "B" component herein may contain the situations that "A" component directly faces "B" component or one or more additional components are between "A" component and "B" component. Also, the description of "A" component "adjacent to" "B" component herein may contain the situations that "A" component is directly "adjacent to" "B" component or one or more additional components are between "A" component and "B" component. Accordingly, the drawings and descriptions will be regarded as illustrative in nature and not as restrictive.

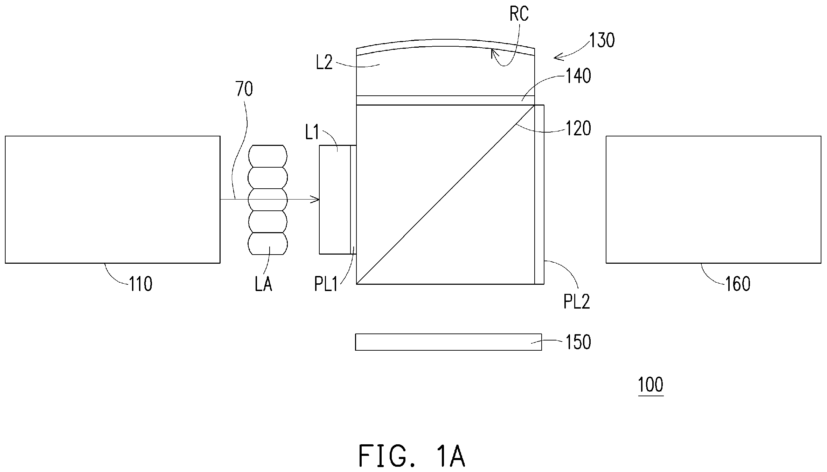

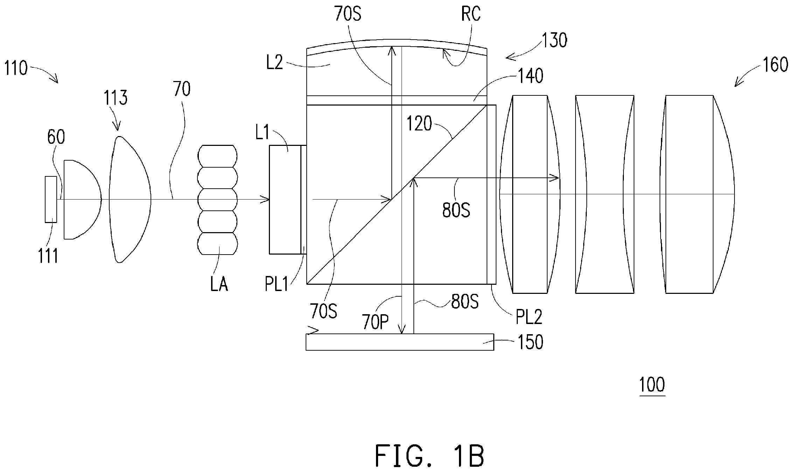

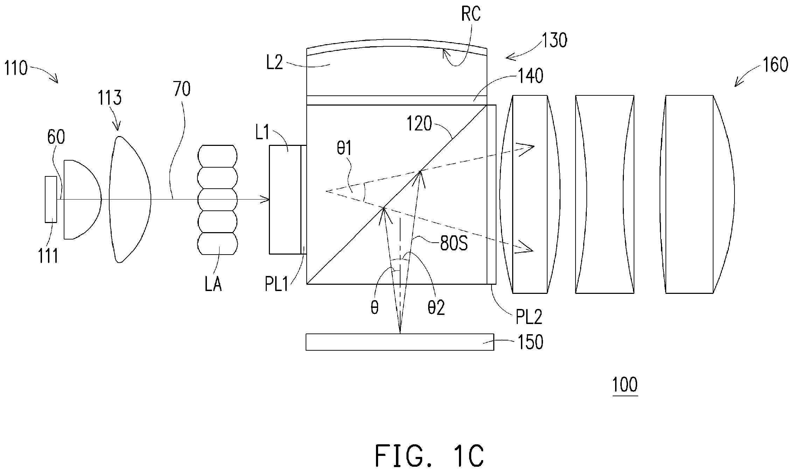

FIG. 1A is a structural schematic diagram of a projection device according to an embodiment of the invention. FIG. 1B is an optical path schematic diagram of light beams of the projection device of FIG. 1A. FIG. 1C is a schematic diagram of a field of view (FOV) angle of an image beam of the projection device of FIG. 1A. Referring to FIG. 1A and FIG. 1B, the projection device 100 includes an illumination system 110, a polarizing beam splitter 120, a reflection element 130, a 1/4 wave plate 140, a reflective light valve 150 and a projection lens 160. To be specific, as shown in FIG. 1A and FIG. 1B, the illumination system 110 is configured to emit an illumination beam 70. For example, as shown in FIG. 1B, in the embodiment, the illumination system 110 includes at least one light source 111 and a lens group 113, and the at least one light source 111 provides at least one light beam 60. In the embodiment, the lens group 113 shown in FIG. 1B is, for example, implemented by one piece of lens, thought the lens group 113 may include a plurality of lenses, which is determined according to an actual design. In the embodiment, the at least one light source 111 may be a white light Light-Emitting Diode (LED), which is adapted to provide a white light beam, though the invention is not limited thereto. Moreover, in the embodiment, the lens group 113 is disposed on a transmission path of the at least one light beam 60 provided by the at least one light source 111, and the at least one light beam 60 passes through the lens group 113 to form an illumination beam 70. It should be noted that the projection device 100 may be disposed in a display device to project an image beam, wherein the display device may be a projector, a head-mounted display device of virtual reality or a head-mounted display device of augmented reality, and the type of the display device applying the projection device 100 is not limited by the invention.

On the other hand, as shown in FIG. 1A and FIG. 1B, in the embodiment, the projection device 100 further includes a lens array LA, a first lens L1 and a first polarizer PL1. The lens array LA is, for example, a fly-eye lens array. To be specific, as shown in FIG. 1A and FIG. 1B, in the embodiment, the lens array LA, the first lens L1 and the first polarizer PL1 are disposed on a transmission path of the illumination beam 70. Moreover, the lens array LA and the first polarizer PL1 are located between the illumination system 110 and the reflective light valve 150, and the first lens L1 is located between the lens array LA and the first polarizer PL1. For example, as shown in FIG. 1A and FIG. 1B, in the embodiment, the first lens L1 and the first polarizer PL1 may be attached on the polarizing beam splitter 120 through an adhesion layer (not shown), though the invention is not limited thereto. In another embodiment, the first lens L1 and the first polarizer PL1 may also be separated from the polarizing beam splitter 120.

To be specific, as shown in FIG. 1B, in the embodiment, the lens array LA may converge and uniform a light beam, so that when the illumination beam 70 is transmitted to the lens array LA through the illumination system 110, the lens array LA may uniform the illumination beam 70, and transmit the same to the subsequent optical components and the reflective light valve 150. Moreover, in the embodiment, the first lens L1 may have a plane and a curved surface or has two curved surfaces, and a refractive index of the first lens L1 may be designed by any of those skilled in the art according to an actual optical path design, such that the illumination beam 70 may be transmitted to the subsequent optical components and the reflective light valve 150 in good condition, which is not limited by the invention.

On the other hand, as shown in FIG. 1B, in the embodiment, the first polarizer PL1 is configured to polarize the illumination beam 70 to form a polarized light (an illumination beam 70S) having a first polarization direction, and make the illumination beam 70S having the first polarization direction to penetrate through, and the illumination beam 70S is then incident to the polarizing beam splitter 120. For example, in the embodiment, the first polarization direction is an S polarization direction, though the invention is not limited thereto.

Further, as shown in FIG. 1A and FIG. 1B, in the embodiment, the polarizing beam splitter 120, the 1/4 wave plate 140 and the reflection element 130 are disposed on a transmission path of the illumination beam 70S, wherein the polarizing beam splitter 120 is located between the illumination system 110 and the reflection element 130, and the 1/4 wave plate 140 is located between the reflection element 130 and the polarizing beam splitter 120. For example, the polarizing beam splitter 120 may be plated with a polarizing beam splitting film in internal thereof or is formed by an adhesive film, though the invention is not limited thereto. On the other hand, in the embodiment, the reflection element 130 and the 1/4 wave plate 140 are attached on the polarizing beam splitter 120 through an adhesion layer (not shown), though the invention is not limited thereto. In other embodiments, the reflection element 130 and the 1/4 wave plate 140 may also be separated from the polarizing beam splitter 120.

To be specific, as shown in FIG. 1B, in the embodiment, the polarizing beam splitter 120 is configured to reflect the illumination beam 70S having the first polarization direction. The illumination beam 70S is transmitted to the 1/4 wave plate 140 and the reflection element 130 after being reflected by the polarizing beam splitter 120. The reflection element 130 is configured to reflect the illumination beam 70S, and the illumination beam 70S is again transmitted to the polarizing beam splitter 120 through the 1/4 wave plate 140. As shown in FIG. 1B, in the embodiment, the illumination beam 70S having the first polarization direction passes through the 1/4 wave plate 140 one after another, and is modulated into the illumination beam 70P having a second polarization direction by the 1/4 wave plate 140. When the illumination beam 70P is again transmitted to the polarizing beam splitter 120, the polarizing beam splitter 120 is pervious to the illumination beam 70P having the second polarization direction and transmits the same to the reflective light valve 150.

To be specific, as shown in FIG. 1A and FIG. 1B, in the embodiment, the reflection element 130 has a reflective curved surface RC, and the reflective curved surface RC faces toward the 1/4 wave plate 140, and is configured to reflect the illumination beam 70S from the 1/4 wave plate 140. In the embodiment, the reflective curved surface RC of the reflection element 130 is a spherical surface, an aspherical surface, or an optical diffraction surface. Moreover, in the embodiment, the reflective curved surface RC of the reflection element 130 may be formed by plating a lens surface. For example, as shown in FIG. 1A and FIG. 1B, in the embodiment, the reflection element 130 may also include a second lens L2, wherein the 1/4 wave plate 140 is located between the second lens L2 and the polarizing beam splitter 120, and the reflective curved surface RC is formed on a surface of the second lens L2 away from the 1/4 wave plate 140. In this way, the reflective curved surface RC of the reflection element 130 may be formed by plating a surface of the second lens L2 away from the 1/4 wave plate 140, though the invention is not limited thereto. In other embodiments, the reflection element 130 may also be a reflective mirror.

Moreover, in the embodiment, two surfaces of the reflection element 130 may respectively a plane and the reflective curved surface RC, or may be two curved surfaces including the reflective curved surface RC. A refractive index of the reflection element 130 may be designed by any of those skilled in the art according to an actual optical path design, such that the illumination beam 70S having the first polarization direction may be transmitted to the subsequent optical components and the reflective light valve 150 in good condition, which is not limited by the invention.

Further, as shown in FIG. 1B, in the embodiment, the reflective light valve 150 is disposed on a transmission path of the illumination beam 70P having the second polarization direction. For example, in the embodiment, the reflective light valve 150 may be a Liquid-Crystal-On-Silicon panel (LCOS panel). The reflective light valve 150 is configured to modulate the illumination beam 70P having the second polarization direction into an image beam 80S having the first polarization direction. In the embodiment, the first polarization direction is perpendicular to the second polarization direction. For example, the first polarization direction is, for example, the S polarization direction, and the second polarization direction is, for example, the P polarization direction. However, the invention is not limited thereto. In other embodiments, the first polarization direction and the second polarization direction may be respectively the P polarization direction and the S polarization direction.

On the other hand, as shown in FIG. 1B, in the embodiment, the projection lens 160 is disposed on a transmission path of the image beam 80S, and the projection lens 160, for example, includes a plurality of lenses with refractive indexes. In this way, after the reflective light valve 150 modulates the illumination beam 70P having the second polarization direction into the image beam 80S having the first polarization direction, the reflective light valve 150 reflects the image beam 80S having the first polarization direction to the polarizing beam splitter 120, and the polarizing beam splitter 120 reflects the image beam 80S having the first polarization direction to the projection lens 160. In this way, as shown in FIG. 1B, in the embodiment, an optical axis of the illumination beam 70S incident to the polarizing beam splitter 120 is parallel with an optical axis of the projection lens 160, and an optical axis of the image beam 80S reflected by the polarizing beam splitter 120 is also parallel with the optical axis of the projection lens 160. Further, as shown in FIG. 1B, in the embodiment, the optical axis of the illumination beam 70S incident to the polarizing beam splitter 120 is coincided with the optical axis of the projection lens 160. It should be noted that the optical axis of the illumination beam 70S is a path that a main ray of the illumination beam 70S passes through, the optical axis of the projection lens 160 is a geometric center connection of the projection lens 160, and the optical axis of the image beam 80S is a path that a main ray of the image beam 80S passes through.

In this way, the projection device 100 may modulate the polarization direction of the illumination beam 70S incident to the reflective light valve 150 through the configuration of the 1/4 wave plate 140 and the reflection element 130, such that the optical axis of the projection lens 160 may be disposed in a direction parallel with the illumination beam 70S incident to the polarizing beam splitter 120. In this way, in the embodiment of the invention, the projection device 100 may have an in-line optical path design, so as to be widely applied to increasingly diversified electronic products.

Moreover, generally, due to the beam splitting characteristic of the polarizing beam splitter 120, light beams of different wavebands incident in a large angle may have different transmittances, so that the light beams incident in a large angle are liable to have a chromatic aberration phenomenon. If the polarizing beam splitter 120 that eliminates the chromatic aberration phenomenon and allows the light beams to be incident in the large angle is produced, fabrication difficulty and cost of the polarizing beam splitter 120 are increased. However, under the design of the optical path structure of the embodiment, a half field of view (FOV) angle of the image beam 80S incident to the polarizing beam splitter 120 may be effectively maintained below a certain angle. For example, as shown in FIG. 1C, in the embodiment, if a FOV angle θ1 of the projection lens 160 required for imaging is about 50 degrees, a FOV angle θ2 of the image beam 80S incident to the polarizing beam splitter 120 is then about 25 degrees. Therefore, in the embodiment, the half FOV angle θ of the image beam 80S incident to the polarizing beam splitter 120 may be smaller than 15 degrees. Therefore, the projection device 100 may adopt the polarizing beam splitter 120 with low cost and a simple structure, so as to reduce the manufacturing cost of the projection device 100.

Moreover, in the embodiment, the projection device 100 may selectively include a second polarizer PL2. As shown in FIG. 1A and FIG. 1B, the second polarizer PL2 is disposed on the transmission path of the image beam 80S, and the second polarizer PL2 is located between the polarizing beam splitter 120 and the projection lens 160. In the embodiment, the second polarizer PL2 is pervious to the image beam 80S having the first polarization direction, such that the image beam 80S is incident to the projection lens 160. Further, in the embodiment, by configuring the first polarizer PL1 and the second polarizer PL2, the light beam having the second polarization direction is filtered and cannot be transmitted to the projection lens 160, so as to increase image contrast.

In an embodiment, although the number of the light source 111 of the illumination system 110 of the projection device 100 is one, the invention is not limited thereto. In other embodiments, the number of the light sources 111 of the illumination system 110 may also be plural, and it is apparent to those skilled in the art that various modifications and variations may be made to the number of the light sources and the optical paths with reference of the invention without departing from the scope of the invention. Some other embodiments are provided below for further description.

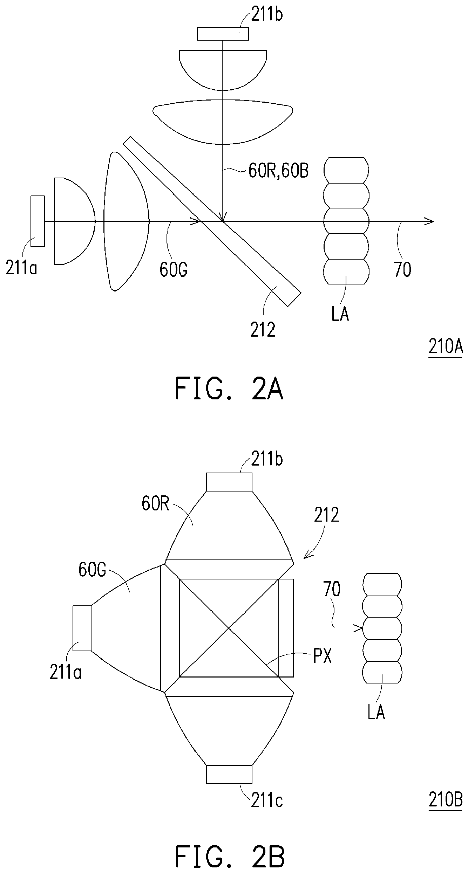

FIG. 2A is a structural schematic diagram of another illumination system of the projection device of FIG. 1A. Referring to FIG. 2A, the illumination system 210A of the embodiment is similar to the illumination system 110 of FIG. 1B, and differences there between are as follows. Referring to FIG. 2A, in the embodiment, the number of the at least one light source 111 of the illumination system 210A is plural, so as to provide a plurality of light beams 60R, 60G and 60B, and the illumination system 210A further includes a light combining unit 212. The light combining unit 212 is disposed on a transmission path of the light beams 60R, 60G and 60B, and the light combining unit 212 is configured to combine the light beams 60R, 60G and 60B into the illumination beam 70. For example, as shown FIG. 2A, the illumination system 210A has a first light source 211a and a second light source 211b, wherein the first light source 211a includes a green light-emitting diode (LED) configured to provide a green light beam 60G, and the second light source 211b includes a red LED and a blue LED configured to provide a red light beam 60R and a blue light beam 60B. Moreover, in the embodiment, the light combining unit 212 is, for example, a dichroic mirror, and the light combining unit 212 may be pervious to the green light beam 60G, and provides a reflection function to other colors (for example, the red color, the blue color, etc.) of the light beams 60R and 60B. In this way, as shown in FIG. 2A, the light beam 60G provided by the first light source 211a may penetrate through the light combining unit 212, and the light beams 60R, 60B provided by the second light source 211b may be reflected by the light combining unit 212, and the light beams are transmitted to the subsequent lens array LA after being combined into the illumination beam 70. In this way, when the illumination system 210A is applied to the aforementioned projection device 100, the projection device 100 may also achieve the similar effects and advantages, which are not repeated.

FIG. 2B is a structural schematic diagram of another illumination system of the projection device of FIG. 1A. Referring to FIG. 2B, the illumination system 210B of the embodiment is similar to the illumination system 210A of FIG. 2A, and differences there between are as follows. Referring to FIG. 2B, in the embodiment, the illumination system 210B includes a first light source 211a, a second light source 211b and a third light source 211c, and the three light sources respectively include a green LED, a red LED and a blue LED adapted to respectively provide a green light beam 60G, a red light beam 60R and a blue light beam 60B. On the other hand, as shown in FIG. 2B, the light combining unit 212 includes an X prism PX, and the X prism PX includes two dichroic mirrors, and the X prism PX is disposed on the transmission path of the light beams 60R, 60G and 60B, such that the light beams 60R, 60G and 60B are transmitted to the lens array LA after being combined into the illumination beam 70. In this way, when the illumination system 210B is applied to the aforementioned projection device 100, the projection device 100 may also achieve the similar effects and advantages, which are not repeated.

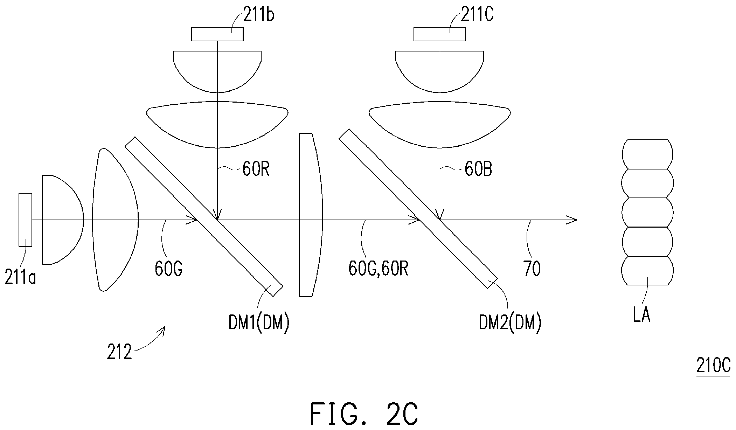

FIG. 2C is a structural schematic diagram of another illumination system of the projection device of FIG. 1A. Referring to FIG. 2C, the illumination system 210C of the embodiment is similar to the illumination system 210A of FIG. 2A, and differences there between are as follows. Referring to FIG. 2C, in the embodiment, the illumination system 210C includes the first light source 211a, the second light source 211b and the third light source 211c, and the three light sources respectively include a green LED, a red LED and a blue LED adapted to respectively provide a green light beam 60G, a red light beam 60R and a blue light beam 60B. On the other hand, as shown in FIG. 2C, the light combining unit 212 includes at least one dichroic mirror DM, and the at least one dichroic mirror DM is disposed corresponding to the transmission path of the light beams 60R, 60G and 60B.

For example, in the embodiment, the dichroic mirror DM1 is, for example, pervious to the green light beam 60G, and provides a reflection function to the light beam 60R with other colors (for example, the red color, etc.), and another dichroic mirror DM2 is, for example, pervious to the green light beam 60G and the red light beam 60R, and provides a reflection function to the blue light beam 60B. In this way, as shown in FIG. 2C, the light beams 60R, 60G and 60B respectively provided by the first light source 211a, the second light source 211b and the third light source 211 c may be combined into the illumination beam 70 by the light combining unit 212, and then the illumination beam 70 is transmitted to the lens array LA. In this way, when the illumination system 210C is applied to the aforementioned projection device 100, the projection device 100 may also achieve the similar effects and advantages, which are not repeated.

In summary, the embodiments of the invention have at least one of the following advantages and effects. In the embodiments of the invention, the projection device is adapted to modulate a polarization direction of the illumination beam incident to the reflective light valve through the configuration of the 1/4 wave plate and the reflection element, so that an optical axis of the projection lens may be disposed in a direction parallel with the illumination beam incident to the polarizing beam splitter. In this way, in the embodiments of the invention, the projection device may have an in-line optical path design, so as to be widely applied to increasingly diversified electronic products.

The foregoing description of the preferred embodiments of the invention has been presented for purposes of illustration and description. It is not intended to be exhaustive or to limit the invention to the precise form or to exemplary embodiments disclosed. Accordingly, the foregoing description should be regarded as illustrative rather than restrictive. Obviously, many modifications and variations will be apparent to practitioners skilled in this art. The embodiments are chosen and described in order to best explain the principles of the invention and its best mode practical application, thereby to enable persons skilled in the art to understand the invention for various embodiments and with various modifications as are suited to the particular use or implementation contemplated. It is intended that the scope of the invention be defined by the claims appended hereto and their equivalents in which all terms are meant in their broadest reasonable sense unless otherwise indicated. Therefore, the term "the invention", "the present invention" or the like does not necessarily limit the claim scope to a specific embodiment, and the reference to particularly preferred exemplary embodiments of the invention does not imply a limitation on the invention, and no such limitation is to be inferred. The invention is limited only by the scope of the appended claims. Moreover, these claims may refer to use "first", "second", etc. following with noun or element. Such terms should be understood as a nomenclature and should not be construed as giving the limitation on the number of the elements modified by such nomenclature unless specific number has been given. The abstract of the disclosure is provided to comply with the rules requiring an abstract, which will allow a searcher to quickly ascertain the subject matter of the technical disclosure of any patent issued from this disclosure. It is submitted with the understanding that it will not be used to interpret or limit the scope or meaning of the claims. Any advantages and benefits described may not apply to all embodiments of the invention. It should be appreciated that variations may be made in the embodiments described by persons skilled in the art without departing from the scope of the present invention as defined by the following claims. Moreover, no element and component in the present disclosure is intended to be dedicated to the public regardless of whether the element or component is explicitly recited in the following claims.

## Claims

1. A projection device, comprising:
an illumination system (110), configured to emit an illumination beam (70);
a polarizing beam splitter (120), disposed on a transmission path of the illumination beam (70), and configured to reflect the illumination beam (70) having a first polarization direction;
a reflection element (130), disposed on the transmission path of the illumination beam (70), wherein the polarizing beam splitter (120) is located between the illumination system (110) and the reflection element (130);
a 1/4 wave plate (140), disposed on the transmission path of the illumination beam (70), and located between the reflection element (130) and the polarizing beam splitter (120), wherein the illumination beam (70) is reflected by the polarizing beam splitter (120) and transmitted to the 1/4 wave plate (140) and the reflection element (130), and the illumination beam (70) having the first polarization direction is modulated by the 1/4 wave plate (140) to have a second polarization direction;
a reflective light valve (150), disposed on the transmission path of the illumination beam (70) having the second polarization direction, wherein the reflective light valve (150) is configured to modulate the illumination beam (70) having the second polarization direction into an image beam (80S) having the first polarization direction; and
a projection lens (160), disposed on a transmission path of the image beam (80S).

2. The projection device as claimed in claim 1, wherein an optical axis of the illumination beam (70) incident to the polarizing beam splitter (120) is parallel with an optical axis of the projection lens (160).

3. The projection device as claimed in claim 1 or 2, further comprising a lens array (LA), disposed on the transmission path of the illumination beam (70), and located between the illumination system (110) and the reflective light valve (150).

4. The projection device as claimed in any one of claims 1,2 or 3, further comprising a first polarizer (PL1), disposed on the transmission path of the illumination beam (70), and located between the illumination system (110) and the reflective light valve (150).

5. The projection device as claimed in claim 4, further comprising a first lens (L1), disposed on the transmission path of the illumination beam (70), and located between the lens array (LA) and the first polarizer (PL1).

6. The projection device as claimed in claim 4 or 5, wherein the first lens (L1) and/or the first polarizer (PL1) is/are adhered on the polarizing beam splitter (120) through an adhesion layer;
or
the first lens (L1) and/or the first polarizer (PL1) is/are separated from the polarizing beam splitter (120).

7. The projection device as claimed in any one of the preceding claims, further comprising a second polarizer (PL2), disposed on the transmission path of the image beam (80S), and located between the polarizing beam splitter (120) and the projection lens (160).

8. The projection device as claimed in any one of the preceding claims, wherein the reflection element (130) has a reflective curved surface, and the reflective curved surface faces the 1/4 wave plate (140).

9. The projection device as claimed in any one of the preceding claims, wherein the reflection element (130) comprises a second lens (L2), the 1/4 wave plate (140) is located between the second lens (L2) and the polarizing beam splitter (120) and/or the reflection element (130) and the 1/4 wave plate (140) are separated from the polarizing beam splitter (120).

10. The projection device as claimed in claim 9, wherein the reflective curved surface is formed on a surface of the second lens (L2) away from the 1/4 wave plate (140) and/or the reflective curved surface of the reflection element (130) is a spherical surface, an aspherical surface, or an optical diffraction surface.

11. The projection device as claimed in any one of the preceding claims, wherein an optical axis of the image beam (80S) reflected by the polarizing beam splitter (120) is parallel with an optical axis of the projection lens (160) and/or an optical axis of the illumination beam (70) incident to the polarizing beam splitter (120) is coincided with an optical axis of the projection lens (160).

12. The projection device as claimed in any one of the preceding claims, wherein a half field of view angle of the image beam (80S) incident to the polarizing beam splitter (120) is smaller than 15 degrees.

13. The projection device as claimed in any one of the preceding claims, wherein the illumination system (110) comprises:
at least one light source (111), providing at least one light beam (60); and
a lens group (113), disposed on a transmission path of the at least one light beam (60), wherein the at least one light beam (60) passes through the lens group (113) to form the illumination beam (70).

14. The projection device as claimed in claim 13, wherein the number of the at least one light source (211a; 211b; 211c) is plural, so as to provide a plurality of light beams (60R, 60B, 60G), and the illumination system (110) further comprises:
a light combining unit (212), disposed on a transmission path of the light beams (60R, 60B, 60G), and configured to combine the light beams into the illumination beam (70).

15. The projection device as claimed in claim 14, wherein the light combining unit (212) comprises an X prism (PX) disposed on the transmission path of the light beams (60R, 60B, 60G) or the light combining unit (212) comprises at least one dichroic mirror (DM), and the at least one dichroic mirror (DM) is disposed corresponding to the transmission paths of the light beams (60R, 60B, 60G).
